# EUROPEAN PATENT APPLICATION

(11) **EP 0 552 840 A2**
(43) Date of publication of application: **28.07.1993**
(21) Application number: 93200127.4
(22) Date of filing: 19.01.1993
(51) Int. Cl.: A22B 7/00, A22B 5/00, A22B 3/06

(54) **Transporting and stunning device for animals for slaughter**

(30) Priority: 20.01.1992 NL 9200104
(71) Applicant: STORK R.M.S. B.V., NL-7131 PG Lichtenvoorde (NL)
(72) Inventor: Te Dorsthorst, Wilhelmus Antonius Bernardus, NL-7131 DK Lichtenvoorde (NL); Korenberg, Hendrik Jan, NL-7103 DS Winterswijk (NL); Pardijs, Hendrik Jan, NL-7102 AZ Winterswijk (NL); Pruijs, Fransiscus Engelbertus, NL-7045 BG Azewijn (NL)
(74) Representative: Schumann, Bernard Herman Johan

(57) **Abstract**

Device for guiding animals, in particular animals for slaughtering, to a treating apparatus, for instance stunning apparatus, which device is provided with a walkway (4) with floor and at least one conveyor extending between walkway and treating apparatus and formed by an endless element (2) trained round at least two reversing members (3), which members (3) are rotatable round lying shafts such that both the carrying and the returning part of the endless element lie (2) in a standing plane, wherein the endless element (2) is covered on the side remote from the reversing members (3) with a support body (6) of elastic material softer than the endless element.

## Description

The invention relates to a device for guiding animals, in particular animals for slaughtering such as pigs, sheep and the like, to a treating apparatus, which device is provided with a walkway with a floor and at least one conveyor extending between walkway and treating apparatus and formed by an endless element trained round at least two reversing members, which members are rotatable round lying shafts such that both the carrying and the returning part of the endless element lie in a standing plane.

Such a device is known for instance from the American patent specification 3991438. The animals for slaughter are herein transported between two parallel plates disposed on either side of the conveyor. The animals are supported with their belly side on the active part of the conveyor belt and their legs therefore hang freely downward. The drawback of the known conveyors is that they have a comparatively hard surface whereby damage can be caused to the animals for slaughtering as a result of muscle contraction during stunning. This impairs the quality of the meat. Internal bleeding has a negative effect on the meat quality.

The object of the invention is to obviate the above stated drawback and the device according to the invention is distinguished in that the endless element is covered on the side remote from the reversing members with a support body of elastic material softer than the endless element.

Due to the soft surface damage is prevented not only during transport of the animals for slaughtering to the treatment location but also at the moment that the animal is treated. Should this be for example a stunning device, tonic cramps can then occur as a result of the electrical current, which muscle spasms can cause damage. Due to the soft support surface, damage to the inside of the hams is thereby prevented.

In the preferred embodiment the support body is an elastomer of polyurethane, preferably with a hardness lying in the range of 20-45° shore, preferably 30-40° shore, subject to the type of animal for slaughter that has to be treated.

The elastic support body can be a closed endless body integrally formed with the endless element.

According to another embodiment the elastic support body can be constructed from mutually spaced blocks carried by the endless element. This furthers a stable position on the conveyor of the animal for treatment.

In addition, two blocks can be arranged mutually adjacent relative to the transporting direction so that the breadth of the conveyor can easily be adapted to the type of animal for slaughtering.

It is recommended to make the elastic support body so broad that it extends on both sides over the endless element and the fixed guiding therefor, so that also in the case of the above mentioned cramp state of the animals for slaughter no contact occurs with the harder parts of the conveyor.

The invention further relates to a device for treating animals for slaughtering such as pigs, sheep etc., which device is provided with a conveyor belt for the animals for slaughtering in addition to a stunning apparatus containing at least one pair of electrodes, which stunning apparatus is provided with at least one pair of guide members, each of which is arranged to the side of the central longitudinal plane of the conveyor belt such that the mutually facing boundaries of the guide members lie at a predetermined distance to form a boundary space for the head of the animal for slaughter.

In the known stunning devices electrodes are used which have a relatively large contact surface with the head portion of the animal. The stunning current can hereby fan out over a large part of the body of the animal. The thereby excited tonic cramps may entail the danger of bone breaks and even back breakage. The invention has for its object to obviate the above drawback and provides a device which is distinguished in that the electrode is arranged on the guide member such that the contact part of the electrode is located in front of the boundary space in the transporting direction.

Due to this placing of the electrode in relation to the guide members it is possible to place the current as closely as possible to the brain portion of the head, whereby stunning occurs immediately and the tonic cramps are less serious. The electrodes can moreover be provided with a much smaller contact surface of a maximum of 5 cm² as a result of this favourable placing, wherein these electrodes are preferably ring or pin-shaped. The advantage of electrodes with small contact surface is that a better directed current path can be achieved.

According to the invention the device is further provided with an electrical feed circuit, wherein the power supply to the guide members amounts to a maximum of 48 volts and that to the electrode at least 200 volts. It is herein recommended to use the applied current between the guide members to energize the drive member of the electrode and to apply the stunning voltage via the electrodes. The electrode will thus be energized immediately and stunning take place when the snout of the animal makes contact with the guide members.

Above mentioned and other features of the invention will be further elucidated hereinbelow with reference to a number of embodiments.

In the drawing:
Figure 1 shows a side view, partly in section, of a first embodiment of a conveyor according to the invention;
figure 2 shows a section along the line II-II of the conveyor of figure 1;
figure 3 shows a detail on enlarged scale of the conveyor in the form of a chain;
figure 3a shows an alternative embodiment of the conveyor of figure 3;
figure 4 is a side view corresponding with figure 1 of a second embodiment of the conveyor according to the invention;
figure 5 shows on enlarged scale a cross section corresponding with figure 3 of the third embodiment of a conveyor according to the invention;
figure 5a shows a fourth embodiment of the conveyor;
figure 6 is a front view of the conveyor of figure 1, embodied with a stunning apparatus according to the invention;
figure 7 shows a side view of the device of figure 6.

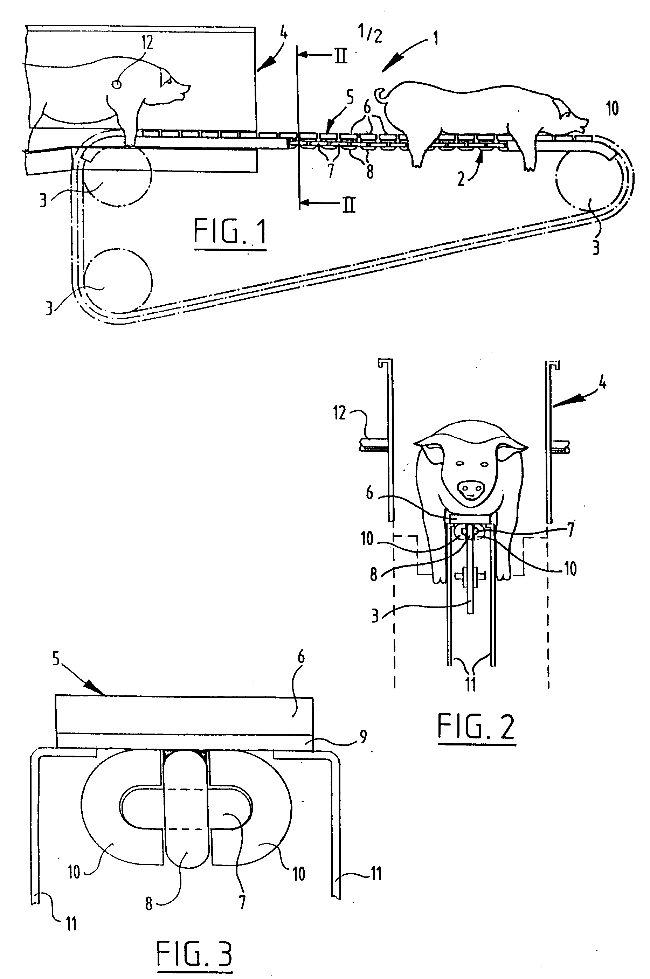

The conveyor 1 shown in figure 1 consists of an endless element 2 which is trained about three reversing members 3.

The rotation shafts of the reversing members 3 are horizontal and are disposed in relation to each other such that the carrying part of conveyor 2 extends substantially horizontally, which part runs from a walkway 4 on the left in figure 1 to a treatment apparatus (not shown) located close the right-hand reversing member 3. The length of the carrying part is subject to the use thereof.

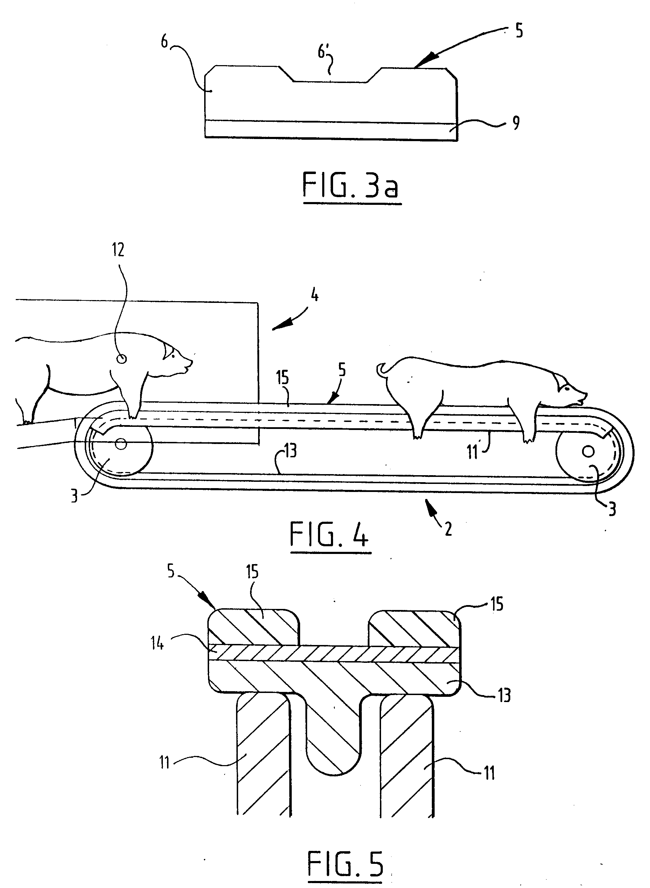

The endless element 2 has on the outside, that is on the horizontal active part on the upper side, a support body 5, here in the form of blocks 6. Since the endless element 2 in the embodiment of figures 1-3 is embodied as a link chain consisting of lying links 7 and standing links 8, it is possible to fix each of the blocks 6 on a standing link 8, see also figure 3.

The support body formed by the blocks 6 is of polyurethane rubber of a determined hardness and dimensions determined by the type of animals for slaughter. The width of each block 6 is such that the belly portion of the animal for slaughter is supported in adequate manner such that the legs thereof can hang freely downward on either side of the conveyor. Each block 6 is herein supported by a support plate 9 which is welded fixedly onto the standing link, see figure 3. Figure 3a shows an alternative embodiment of the upper surface of block 6, which is provided in the middle with a recessed portion 6' for receiving the breast bone.

The lying links 7 of the chain can be supported by U-shaped profiles 10 on either side of the standing links 8, which can be a permanent component of a frame such that when one of the reversing members 3 is set into drive the lying links 7 slide through the gap-like space formed between the U-shaped profiles 10. The plate 9 then slides over the upper surface of the U-shaped profiles and forms a rigid support for the animals for slaughter.

Arranged on either side of the fixed U-shaped profiles 10 are standing plates 11 which serve to cover the conveyor such that legs of the animals for slaughter can slide along the outside thereof.

The above described device operates as follows. By urging on animals for slaughter in the walkway 4 one animal at a time comes to the end thereof and is compelled to drop with the belly onto the support element 6 because the floor of the walkway 4 ends. Once resting with the belly on the support body 5 the animal comes to lie on the blocks 6 with the legs hanging freely on either side of the plates 11 and is further transported in the direction of arrow P1 to a treating apparatus not shown in figure 1. Due to the support body 5 constructed of blocks and manufactured from soft material, neither the belly portion nor the inside of the legs is damaged by the hard elements.

It is noted that the walkway 4 can be hung on a tilt point 12 so that when the animal passes the tilting point it automatically sinks downward onto the support body 5 of conveyor 2.

Figure 4 shows an alternative embodiment of the conveyor according to the invention. The same components are designated here with the same reference numerals.

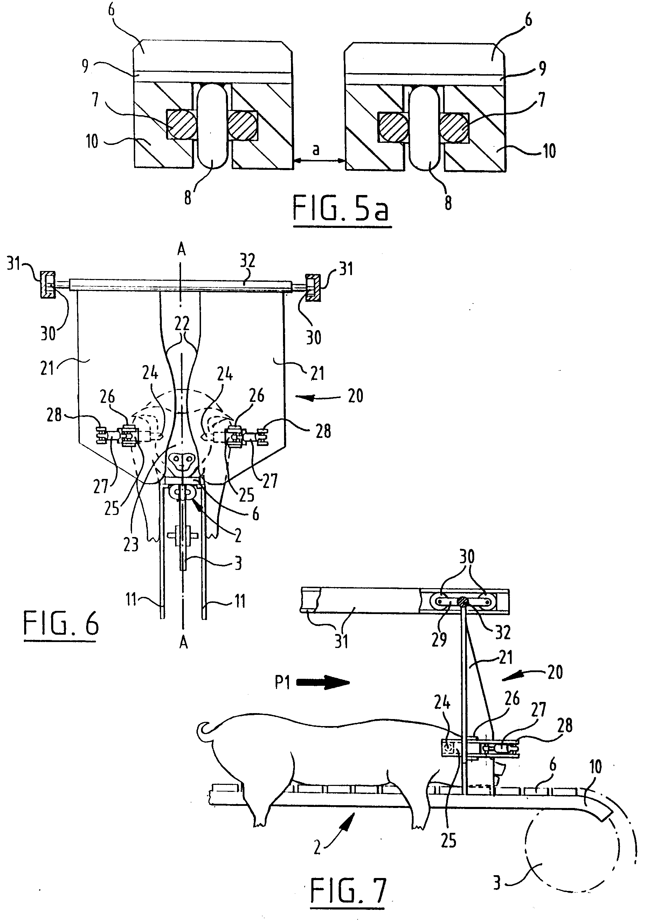

Here only two reversing members 3 are arranged around which is trained an endless element 2 which consists here of a profiled belt 13 that is T-shaped in cross section, see also figure 5. On the upper surface the profiled belt is embodied with a connecting plate 14 onto which are arranged two mutually adjacent belts 15 which form the support body according to the invention. These endless belts 15 are of relatively soft material of for instance polyurethane with a hardness of between the values of 20-45° shore, preferably 30-40° shore.

Within the scope of the invention it is also possible to again sub-divide the belts 15 into blocks 6 as in the embodiment according to figure 1.

The T-shaped profile 13 is supported between the reversing members 3 by fixed guide plates 11 of a width such that sufficient support of the T-shaped profile 13 is provided and of a material such that the smallest possible coefficient of friction is brought about between T-profile 13 and plates 11.

The operation of this embodiment is the same as that according to figure 1.

Figure 5a shows a further alternative embodiment of the conveyor which consists here of two link chains, guided for instance round reversing wheels as according to figure 1, which link chains lie at a mutual distance. Each link chain is again provided with a support plate 9 with block 6 arranged thereon. The space a between the blocks again serves to accommodate the breast bone of the animal for treating.

The above described conveyor lends itself particularly for co-action with a stunning apparatus for animals for slaughter which is shown in figures 6 and 7.

The stunning apparatus 20 consists here of two plate-like guide members 21 each placed to the side of the central longitudinal plane A-A of the conveyor. The mutually facing edges 22 of plates 21 form a boundary of a space 23 which is adapted to the type of animals for slaughtering such that the snout thereof is grasped, oriented and held fast when the animal is moved to the right over conveyor 2, that is, in the direction of arrow P1 in figure 7.

Each guide plate 21 bears an electrode 24 which is arranged on an arm 25 hingedly connected at 26 to the plate 21. On the end opposite the hinge 26 is arranged a cylinder 27 which can be actuated by a suitable pressure medium. The swivelling movement of arm 25 relative to plate 21 is such that the electrode 24 can be carried from a spread position relative to the central longitudinal plane A-A to the head portion of the animal for slaughter still lying in front of the plates 21 in the transporting direction P1, that is, as closely as possible to the brain portion thereof.

The electrode 24 can herein be circular or also pin-like in order to keep the contact surface with the head portion as small as possible and the current feed as focussed as possible.

It is noted that the fixed end of cylinder 27 is supported by a support 28 standing outward relative to the plates 21.

In the embodiment shown the stunning apparatus 20 is suspended from a carriage 29 provided with travel wheels 30 which are held in two U-shaped profiles 31 arranged above and along the conveyor 2. The carriage has a pivot shaft 32 such that plates 21 can pivot upward round these pivot shafts.

It is possible for such a movable stunning apparatus 20 to be displaced at the speed of the conveyor 2, thus enabling sufficient time for the stunning cycle for the animal for slaughter. After the animal has reached the end of conveyor 2 and vacated it the stunning apparatus 20 can be moved back again to the starting position on the left in figure 7.

Stunning takes place as follows. As soon as the snout of the animal arrives between the guide edges 22 of plates 21 it can be ascertained by applying a small voltage of for instance 24 volts to the plates 21 that the animal has been detected. This detection current is used to energize cylinder 27, whereby the electrodes 24 are pressed onto either side of the head with a comparatively high pressure force. The electrodes have a relatively low stunning voltage of 300 volts which, because of the pressure force, is nevertheless sufficient to obtain a stunning voltage of for instance 8 amperes. Due to the accurate placing on either side of the head at the location of the brain the other muscles of the animal are hardly affected and damage as a result of tonic cramps will occur hardly or not at all. The danger of back breakage resulting from free movement of the animal on the conveyor 2 is hereby also prevented.

The invention is not limited to the above described embodiments. Both the guide members can for example be integrated to a single ring which is for instance suspended for upward folding on the carriage.

## Claims

1. Device for guiding animals, in particular animals for slaughtering such as pigs, sheep and the like, to a treating apparatus, which device is provided with a walkway with a floor and at least one conveyor extending between walkway and treating apparatus and formed by an endless element trained round at least two reversing members, which members are rotatable round lying shafts such that both the carrying and the returning part of the endless element lie in a standing plane, **characterized in that** the endless element is covered on the side remote from the reversing members with a support body of elastic material softer than the endless element.

2. Device as claimed in claim 1, **characterized in that** the support body is an elastomer of polyurethane.

3. Device as claimed in claim 1 or 2, **characterized in that** the hardness of the elastic support body lies between 20-45° shore, preferably 30-40° shore.

4. Device as claimed in any of the foregoing claims, **characterized in that** the elastic support body is constructed from mutually spaced blocks.

5. Device as claimed in claim 4, **characterized in that** two blocks are arranged in each case mutually adjacent relative to the transporting direction.

6. Device as claimed in any of the foregoing claims, **characterized in that** the elastic support body consists of solid material.

7. Device as claimed in any of the foregoing claims, **characterized in that** the endless element is at least one link chain.

8. Device as claimed in claim 7, **characterized in that** the connecting links located between the said links are guided in a fixed guiding extending beneath the carrying part between the reversing members.

9. Device as claimed in claims 1-8, **characterized in that** the elastic support body extends on both sides over the endless element and the fixed guiding.

10. Device for treating animals for slaughtering such as pigs, sheep etc., which device is provided with a conveyor belt for the animals for slaughtering in addition to a stunning apparatus containing at least one pair of electrodes, which stunning apparatus is provided with at least one pair of guide members, each of which is arranged to the side of the central longitudinal plane of the conveyor belt such that the mutually facing boundaries of the guide members lie at a predetermined distance to form a boundary space for the head of the animal for slaughtering, **characterized in that** the electrodes are arranged on the guide member such that the contact portion of the electrode is located in front of the boundary space in the transporting direction.

11. Device as claimed in claim 10, **characterized in that** the electrode is arranged hingedly on the guide member and a drive member, for instance cylinder, is arranged between electrode and guide member.

12. Device as claimed in claim 10 or 11, **characterized in that** the contact surface of each electrode is a maximum of 5 cm².

13. Device as claimed in claim 12, **characterized in that** the contact surface is ring-shaped.

14. Device as claimed in claim 12, **characterized in that** the contact surface is formed by a pin.

15. Device as claimed in claim 10, **characterized in that** the boundary of each guide member is curved symmetrically outward relative to the longitudinal plane of the conveyor.

16. Device as claimed in claim 15, **characterized in that** the pair of guide members is integrated to a fixed annular element.

17. Device as claimed in any of the claims 10-16, **characterized in that** the or each guide is pivotable on a lying shaft above the conveyor.

18. Device as claimed in any of the foregoing claims 10-17 provided with an electrical feed circuit, **characterized in that** the power supply to the guide members amounts to a maximum of 48 volts and that to the electrode at least 200 volts.

19. Device as claimed in claim 17, **characterized in that** the applied current between the guide members serves to energize the drive member of the electrode on the guide member.

20. Device as claimed in claim 17**, characterized in that** the applied current between the guide members serves to set the applied voltage on the electrodes.

21. Device as claimed in any of the claims 10-17, wherein the conveyor is embodied as according to any of the claims 1-9.
